# EUROPÄISCHE PATENTANMELDUNG

(11) **EP 2 230 738 A2**
(43) Veröffentlichungstag der Anmeldung: **22.09.2010**
(21) Anmeldenummer: 10405046.3
(22) Anmeldetag: 10.03.2010
(51) Int. Cl.: H02G 3/08, H02G 3/14, G02B 6/44

(54) **Aufputzdose**

(30) Priorität: 19.03.2009 CH 4162009
(71) Anmelder: Zidatech AG, 4614 Hägendorf (CH)
(72) Erfinder: Wacker, Alfred, 5707 Seengen (CH)
(74) Vertreter: Wagner, Wolfgang Heribert

(57) **Zusammenfassung**

Ein Gehäuse (2) ist mit einer an einer Wand angeschraubten Befestigungsplatte (1) verrastbar, indem Ausnehmungen am Gehäuse (2) über Haltelaschen (27) der Befestigungsplatte (1) geschoben werden und Raststege (31) des ersteren unter elastischer Verbiegung unter hakenartige Vorsprünge von Rastlaschen (29) der letzteren gedrückt werden. Ein hinterer Reserveraum, der zur Aufnahme einer Kabelreserve dient, ist durch eine durchbrochene Zwischenwand (7) von einem vorderen Reserveraum (16) zur Aufnahme einer Faserreserve getrennt. Zwei Aufnahmen (10) dienen zur Aufnahme von Kupplungen (11), in welche durch Anschlussöffnungen (12) Stecker eingesteckt werden können. In jeder Anschlussöffnung (12) ist ein Schutzplättchen befestigt, das eine Austrittsöffnung am Grund derselben verdeckt, aber bei Einschieben eines Steckers elastisch ausweicht. Eine die offene Vorderseite des Gehäuses (2) verschliessende Abdeckung umfasst einen Abdeckrahmen (4), der durch Anschläge gegen Verdrehen und Verschieben gegenüber dem Gehäuse (2) gesichert ist. Eine von ihm frei gelassene Restöffnung (5) ist durch eine Abdeckplatte (6) verschlossen, die mittels eines Schraubenbolzen (7) an der Befestigungsplatte (1) gesichert ist.

## Beschreibung

### Technisches Gebiet

Die Erfindung betrifft eine Aufputzdose, wie sie, vor allem in Privathaushalten, als Anschlussdosen für faseroptische Verbindungen eingesetzt werden.

### Stand der Technik

Es sind gattungsgemässe Aufputzdosen bekannt, welche einstückig mit einer Rückwand ausgebildet sind, welche mit der Wand verbunden, gewöhnlich verschraubt ist. Da Umstellungen wie eine Aenderung der Kabelreserve oder das Einziehen eines weiteren Kabels meist nur möglich sind, wenn die Aufputzdose abgenommen wurde, erfordern solche Manipulationen ein Lösen und später Einsetzen und Festziehen mehrerer Schrauben und sind daher verhältnismässig zeitraubend.

### Darstellung der Erfindung

Der Erfindung liegt die Aufgabe zu Grunde, eine gattungsgemässe Aufputzdose derart auszubilden, dass ein alle wesentlichen Elemente enthaltender Bestandteil derselben leicht von der Wand abnehmbar und wieder anbringbar ist. Diese Aufgabe wird durch die Merkmale im Kennzeichen des Anspruchs 1 gelöst. Ein Gehäuse der erfindungsgemässen Aufputzdose kann nach Abnehmen einer Abdeckung und Lösen einer Rastverbindung abgenommen und nach Vornahme der gewünschten Umstellungen wieder aufgesetzt, verrastet und verschlossen werden. Auf diese Weise sind die besagten Umstellungen rasch und einfach durchführbar und die Gefahr von Fehlern ist geringer.

Darüberhinaus ist die erfindungsgemässe Aufputzdose, sobald sie abgenommen ist, auch von der Rückseite her frei zugänglich, was z.B. dazu benutzt werden kann, hier Raum für eine Kabelreserve vorzusehen.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine perspektivische Ansicht einer erfindungsgemässen Aufputzdose,
- Fig. 2: eine Explosionsdarstelleung der Aufputzdose nach Fig. 1,
- Fig. 3: eine Draufsicht auf die Vorderseite eines Gehäuses der Aufputzdose nach Fig. 1, mit einer eingesetzten Kupplung und Kabel,
- Fig. 4: eine Draufsicht auf die Rückseite eines Gehäuses der Aufputzdose entsprechend Fig. 3,
- Fig. 5: vergrössert eine Draufsicht auf das Gehäuse der Aufputzdose nach Fig. 1,
- Fig. 6: einen Schnitt längs VI-VI in Fig. 5,
- Fig. 7: einen Schnitt längs VII-VII in Fig. 5,
- Fig. 8: eine Draufsicht auf die Vorderseite des Gehäuses mit einem Abdeckrahmen der Aufputzdose nach Fig. 1,
- Fig. 9: einen Schnitt längs IX-IX in Fig. 8,
- Fig. 10: einen Schnitt längs X-X in Fig. 8,
- Fig. 11: eine Draufsicht auf die Vorderseite des Gehäuses der Aufputzdose nach Fig. 1, mit eingesetzten Kupplungen und
- Fig. 12: einen Schnitt längs XII-XII in Fig. 11.

### Wege zur Ausführung der Erfindung

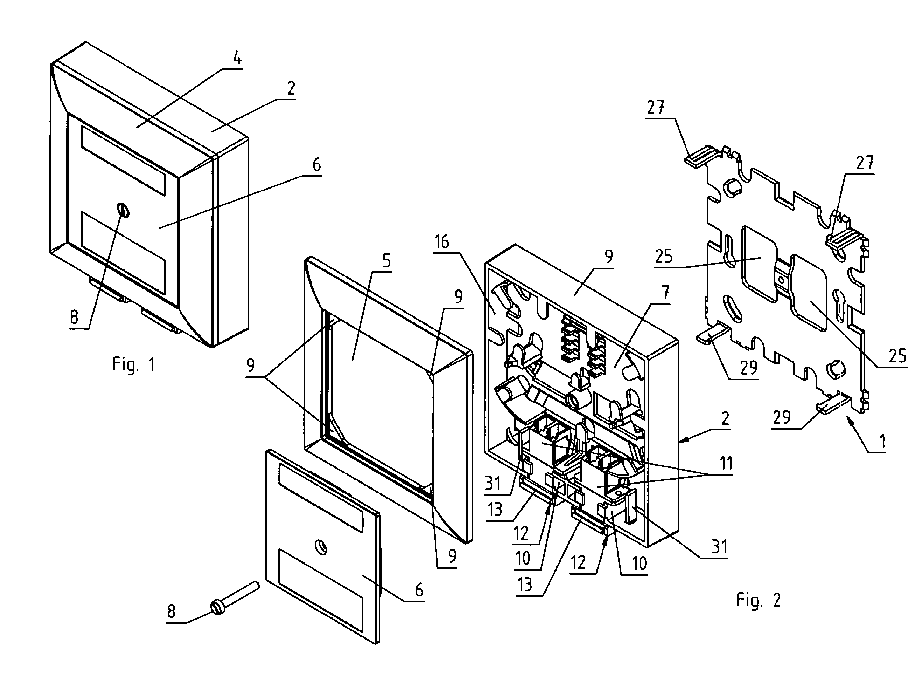

Die ungefähr quadratische Aufputzdose oder Flachaufputzdose umfasst (Fig. 1, 2) eine Befestigungsplatte 1, ein durchbrochenes Stanz- und Biegeteil aus Metall, gewöhnlich Aluminium, das an eine senkrechte Wand geschraubt werden kann und ein mit ihr verbundenes Gehäuse 2 mit einer umlaufenden Seitenwand 3. Das Gehäuse 2 ist an einer Rückseite sowie einer Vorderseite offen, doch liegt die erstere an der Befestigungsplatte 1 an, während die letztere durch eine separate, abnehmbare Abdeckung verschlossen ist. Diese umfasst einen Abdeckrahmen 4, welcher eine Restöffnung 5 freilässt und eine Abdeckplatte 6, welche diese verschliesst. Das Gehäuse 2 weist eine zur Befestigungsplatte 1 parallele, sowohl von derselben als auch von der Abdeckung beabstandete, mehrfach durchbrochene Zwischenwand 7 auf.

Die Aufputzdose wird von einem Schraubenbolzen 8 zusammengehalten, dessen Kopf in einer Versenkung an der nach vorn weisenden Aussenseite der Abdeckplatte 6 anliegt und der durch die Zwischenwand 7 hindurch mit der Befestigungsplatte 1 verschraubt ist. Der Abdeckrahmen 4 weist an den Ecken der Restöffnung versenkte Anschläge 9 auf, an welchen Eckbereiche der Rückseite der Abdeckplatte 6 anliegen, sodass auch der Abdeckrahmen 4 fixiert ist. An der Zwischenwand 7 sind Aufnahmen 10 für Kupplungen 11 vorgesehen, welche durch Anschlussöffnungen 12 in der Seitenwand 3 zugänglich sind. Vor den Anschlussöffnungen 12 sind an der Aussenseite der Seitenwand 3 separate Schutzklappen 13 nach aussen schwenkbar angebracht, mittels derer die Aufnahmen 10 verschliessbar sind. Das Gehäuse 2 und die Abdeckung sowie die Schutzklappen 13 bestehen jeweils aus Kunststoff und sind im Spritzgussverfahren hergestellt.

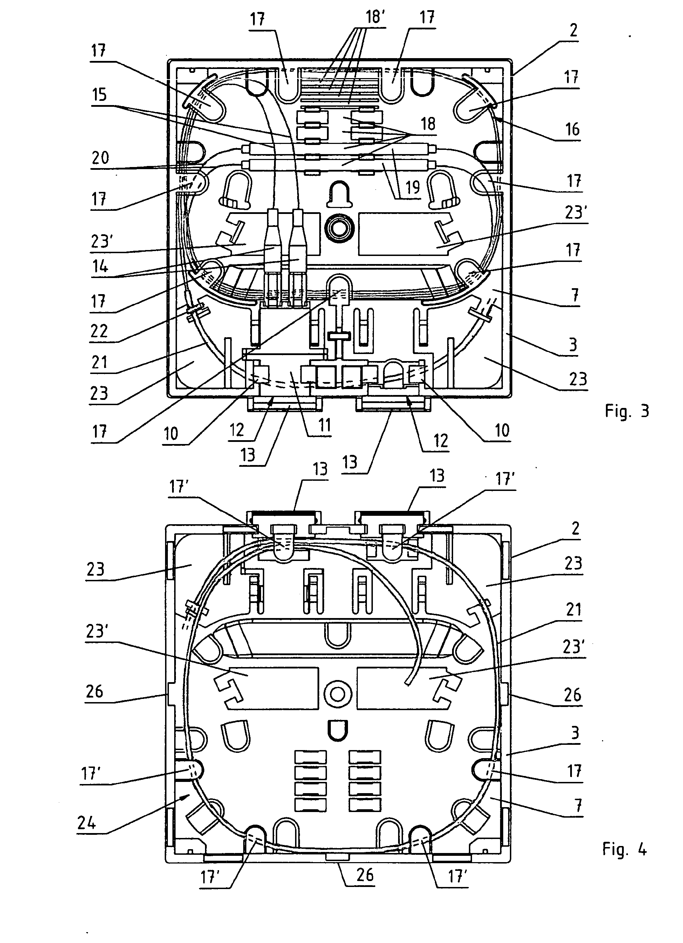

Als Beispiel für eine Kupplung 11 ist (Fig. 3) eine Duplex-Kupplung dargestellt, mit je zwei Steckeraufnahmen an der Innenseite und an der der Anschlussöffnung 12 zugewandten Aussenseite, in die jeweils Stecker 14 einsteckbar sind. An die Stecker 14 an der Innenseite schliesst jeweils eine Ader 15, eine ummantelte Glasfaser, an, welche in einer Windung oder mehreren Windungen an den Aussenseiten eines vorderen Reserveraums 16 entlangläuft und so eine Faserreserve bildet. Dabei wird sie von einer Führung, welche aus an der Zwischenwand 7 angeformten Wandstücken und von den vorderen Rändern derselben und der Seitenwand 3 nach innen in den vorderen Reserveraum 16 ragenden Haltevorsprüngen 17 gebildet wird, festgehalten. An der Mitte des oberen Teils der Zwischenwand 7 sind auch vier parallele Halterungen 18 zur Aufnahme jeweils eines Schrumpfschlauch-Spleissschutzes 19 sowie vier weitere Halterungen 18' zur Aufnahme jeweils eines Press-Spleissschutzes angeformt. Sie sind jeweils als zwei in einer Linie liegende Nuten bzw. eine durchgehende Nut ausgebildet, welche jeweils zwischen zwei parallelen, von der Vorderseite der Zwischenwand abstehenden Stegen, die an ihren vorderen Rändern etwas verdickt sind, gebildet werden.

Am Schrumpfschlauch-Spleissschutz 19 ist jede der Adern 15 mit einer Ader 20 verbunden. Die Adern 20 gehören zu einem Kabel 21, dessen Umhüllung an einem Endabschnitt entfernt ist. Sie bilden ebenfalls eine mindestens eine Windung umfassende Faserreserve im vorderen Reserveraum 16.

Das Kabel 21 ist mittels eines Kabelbinders 22 an der Zwischenwand 7 befestigt und kommt durch einen von mehreren Durchbrüchen 23, 23' in derselben aus einem hinteren Reserveraum 24 (Fig. 4), der zwischen der Zwischenwand 7 und der Befestigungsplatte 1 liegt. Im dargestellten Fall kommt das Kabel 21 aus einer hinter der Befestigungsplatte 1 liegenden Oeffnung in der Wand, aus der es durch eine von zwei Durchlässen 25 (Fig. 2) in der Befestigungsplatte 1 in den hinteren Reserveraum 24 läuft, wo es, von Haltevorsprüngen 17', welche, von der Zwischenwand 7 beabstandet, in den hinteren Reserveraum 24 vorspringen, festgehalten, eine Kabelreserve bildet, die aus mindestens einer an der Innenseite der Seitenwand 2 entlanglaufenden Windung oder mehreren nach aussen aufeinanderfolgenden solchen Windungen besteht, bevor es einen der Durchbrüche 23 erreicht. Alternativ kann das Kabel auch durch eine an einer von mehreren Sollbruchstellen 26 ausgebrochene Oeffnung in der Seitenwand 3 in den hinteren Reserveraum 24 geführt sein, in welchem Fall es in einer Windung oder mehreren Windungen nach innen bis zu einem der Durchbrüche 23' läuft, durch den es in den vorderen Reserveraum 16 geführt ist.

Die zweite Aufnahme 10 kann, wie in Fig. 2 dargestellt, ebenfalls eine Duplex-Kupplung aufnehmen, an die mittels Steckern zwei weitere Adern eines weiteren Kabels anschliessbar sind. Statt einer Duplex-Kupplung kann jedoch auch jeweils eine einfache Kupplung eingesetzt werden, an welche jeweils nur eine Ader anschliessbar ist.

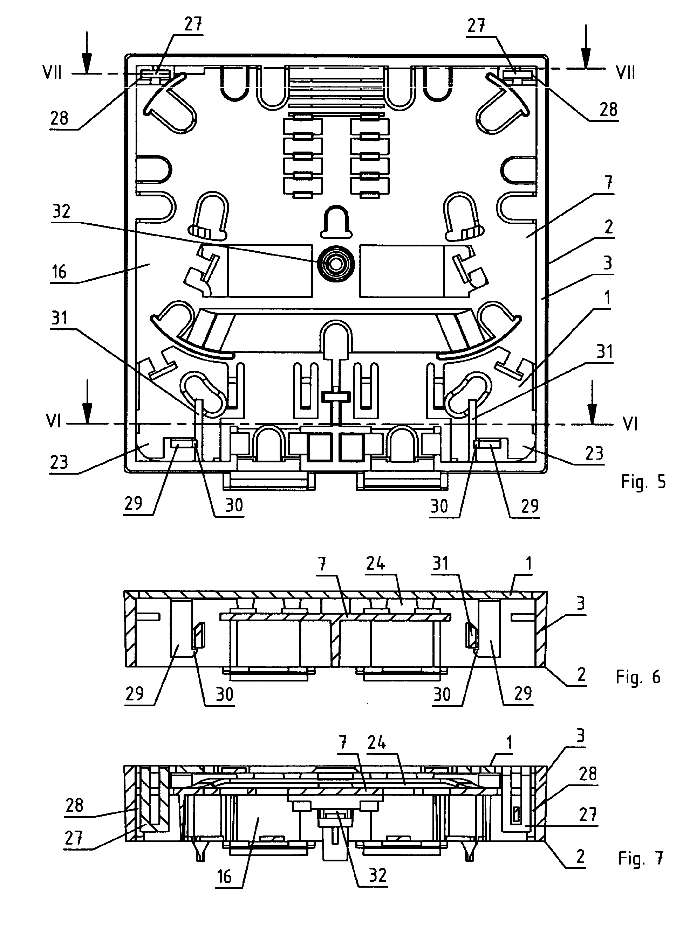

An den oberen Ecken weist die Befestigungsplatte 1 (s. Fig. 2, 5-7) jeweils eine etwa rechtwinklig vorspringende Haltelasche 27 auf, welche jeweils in einer sie knapp umgebenden Ausnehmung 28 im Gehäuse 2 liegt. In der Nähe der unteren Ecken sind ebenfalls etwa rechtwinklig abstehende Rastlaschen 29 vorgesehen, welche durch zwei der Durchbrüche 23 in der Zwischenwand 7 in den vorderen Reserveraum 16 ragen und an ihren Enden gegeneinanderweisende hakenartige Vorsprünge 30 tragen, die jeweils einen von der Seitenwand 2 ins Innere des vorderen Reserveraums 16 ragenden Raststeg 31 übergreifen.

Zur Festlegung des Gehäuses 2 an der Befestigungsplatte 1 wird dasselbe an den Haltelaschen 27 aufgehängt, indem die Ausnehmungen 28 über dieselben geschoben werden. Dann wird das untere Ende des Gehäuses 2 ebenfalls gegen die Befestigungsplatte 1 gedrückt, wobei die Raststege 31 von den Rastlaschen 29 gegeneinander gedrückt werden und dann elastisch in ihre Ausgangslage zurückkehren, in der sie von den Vorsprüngen 30 übergriffen werden. Das Gehäuse 2 ist somit mit der Befestigungsplatte 1 verrastet. Nach Aufsetzen der Abdeckung kann dann mittels des durch eine mittige Durchführung 32 in der Zwischenwand 7 geführten Schraubenbolzens 8 die Verbindung fixiert werden. Umgekehrt kann nach Abnahme der Abdeckung die Verrastung gelöst werden, indem durch die offene Vorderseite des Gehäuses die Raststege 31 gegeneinander gebogen werden. Das untere Ende des Gehäuses 2 kann dann geringfügig von der Befestigungsplatte 1 weggeschwenkt und schliesslich das Gehäuse 2 von den Haltelaschen 27 abgezogen werden.

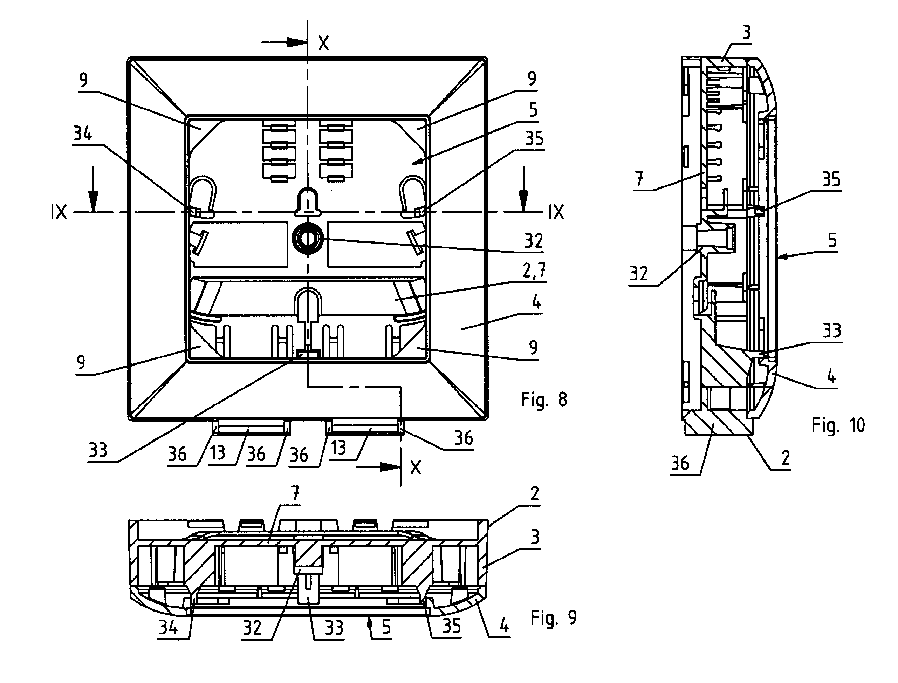

Der Abdeckrahmen 4 liegt (Fig. 8-10) lediglich flach und aussen bündig auf dem vorderen Rand der Seitenwand 3 auf. Er ist jedoch gegen Verdrehung gesichert, indem von der Vorderseite der Zwischenwand 7 ein mittlerer Anschlagvorsprung 33 und zwei seitliche Anschlagvorsprünge 34, 35 rechtwinklig abstehen, deren Spitzen am inneren Rand der Restöffnung 5 am Abdeckrahmen 4 anliegen und und somit Anschläge bilden, welche eine Verdrehung des letzteren sowie eine Verschiebung desselben nach oben gegenüber dem Gehäuse 2 verhindern. Diese Verdrehsicherung wird ergänzt durch beidseits jeder der Anschlussöffnungen 12 an der Aussenseite der Seitenwand 2 angeformte parallele Aussenstege 36, welche etwas über den vorderen Rand der Seitenwand 2 hinausragen und weitere Anschläge bilden, an denen der Aussenrand des Abdeckrahmens 4 anliegt und welche damit ebenfalls einer Verdrehung des letzteren gegenüber dem Gehäuse 2 entgegenwirken und darüberhinaus eine Verschiebung des Abdeckrahmens 4 nach unten verhindern.

Diese Sicherung ist weitgehend unabhängig von den Einzelheiten der Ausbildung des Abdeckrahmens, da lediglich die Lage dreier Stellen des Randes der Restöffnung 5 festliegen müssen sowie die Lage eines Teils seines ohnedies gewöhnlich mit der Aussenseite der Seitenwand bündigen Aussenrandes. Daher können verschiedene Ausführungen der Abdeckung mit dem gleichen Gehäuse 2 verwendet werden. Die Aussenstege 36 dienen gleichzeitig zur Lagerung der Schutzklappen 13.

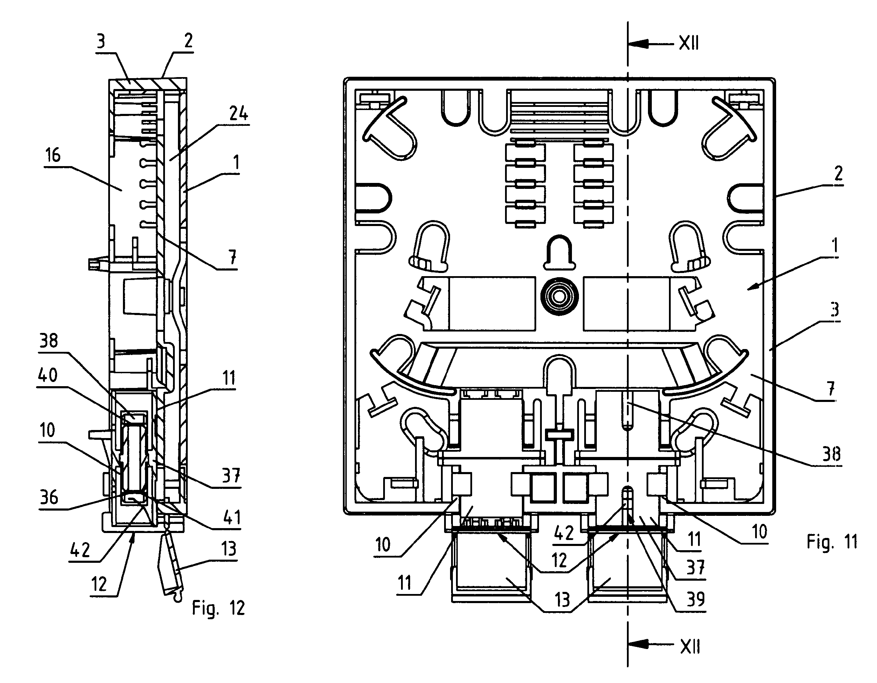

Es ist selbstverständlich auch möglich, dass die eine der Aufnahmen 10 eine Duplex-Kupplung und die andere eine einfache Kupplung enthält. Dieser Fall ist in Fig. 11 gezeigt. Wie aus Fig. 12 hervorgeht, weist die einfache Kupplung 11 eine Hülse 37 auf mit einer inneren Einstecköffnung 38 für die Aufnahme eines Steckers 14 (Fig. 3), in dem eine vom Kabel 21 herkommende Ader 15 endet und einer äusseren Einstecköffnung 39 für die Aufnahme eines (nicht dargestellten) Steckers zur Herstellung einer optischen Verbindung der Ader 15 mit einem Modem oder einem anderen Gerät. Am Grund der inneren Einstecköffnung 38 ist eine Eintrittsöffnung 40 eines Kopplers angeordnet und am Grund der Einstecköffnung 39 eine Austrittsöffnung 41 desselben. Vor der Austrittsöffnung 41 ist ein elastisches Schutzplättchen 42, z.B. aus Blech, an der Hülse 37 befestigt, und zwar im Randbereich der Einstecköffnung 39 schräg gegen die Austrittsöffnung 41 vorragend und diese verdeckend. Wird ein Stecker in die Einstecköffnung 39 geschoben, so übt derselbe eine gegen die Austrittsöffnung 41 gerichtete Kraft auf das Schutzplättchen 42 aus, welches daraufhin unter elastischer Deformation ausweicht. Wird der Stecker wieder herausgezogen, so nimmt das Schutzplättchen 42 wieder seine ursprüngliche Position an und verdeckt die Austrittsöffnung 41. So wird eine Gefährdung vor allem von Kindern verhindert, die versucht sein können, die Schutzklappe 13 zu öffnen und aus nächster Nähe in die Einstecköffnung 39 zu schauen. Bei einer Duplex-Kupplung, welche zwei nebeneinander in der Hülse angeordnete Koppler aufweist, werden vorzugsweise zwei Schutzplättchen vorgesehen, eines für jede der zwei nebeneinanderliegenden Einstecköffnungen. Auch können statt einer Schutzklappe zwei nebeneinanderliegende unabhängig verschwenkbare Schutzklappen vorgesehen sein.

Die Aufputzdose kann in vieler Hinsicht abgeändert werden, ohne dass der Bereich der Erfindung verlassen würde. So kann sie eine andere Form aufweisen, z.B. rund sein oder andere oder zusätzliche Anschlüsse, etwa für Koaxialkabel oder paarverdrillte Kabel aufweisen. Es ist auch möglich, eine gattungsgemässe Dose gemäss einem der Ansprüche 7 bis 9, 10 bis 13 oder Anspruch 15 auszubilden, ohne dass von den kennzeichnenden Merkmalen des Anspruchs 1 Gebrauch gemacht würde.

### Bezugszeichenliste

- 1: Befestigungsplatte
- 2: Gehäuse
- 3: Seitenwand
- 4: Abdeckrahmen
- 5: Restöffnung
- 6: Abdeckplatte
- 7: Zwischenwand
- 8: Schraubenbolzen
- 9: Anschlag
- 10: Aufnahme
- 11: Kupplung
- 12: Anschlussöffnung
- 13: Schutzklappe
- 14: Stecker
- 15: Ader
- 16: vorderer Reserveraum
- 17, 17': Haltevorsprung
- 18, 18': Halterung
- 19: Schrumpfschlauch-Spleissschutz
- 20: Ader
- 21: Kabel
- 22: Kabelbinder
- 23, 23': Durchbruch
- 24: hinterer Reserveraum
- 25: Durchlass
- 26: Sollbruchstelle
- 27: Haltelasche
- 28: Ausnehmung
- 29: Rastlasche
- 30: Vorsprung
- 31: Raststeg
- 32: Durchführung
- 33: mittlerer Anschlagvorsprung
- 34, 35: seitliche Anschlagvorsprünge
- 36: Aussensteg
- 37: Hülse
- 38, 39: Einstecköffnungen
- 40: Eintrittsöffnung
- 41: Austrittsöffnung
- 42: Schutzplättchen

## Patentansprüche

1. Aufputzdose mit mindestens einer Anschlussöffnung (12) für einen Stecker, an die eine Aufnahme (10) für eine Kupplung (11) anschliesst und welche ein einstückiges Gehäuse (2) mit einer umlaufenden Seitenwand (3) umfasst, das an einer Vorderseite offen ist und eine abnehmbare Abdeckung, welche das Gehäuse (2) an der Vorderseite verschliesst sowie eine an einer Wand befestigbare Rückwand, **dadurch gekennzeichnet, dass** die Rückwand als separate Befestigungsplatte (1) ausgebildet ist, mit welcher das Gehäuse (2) verrastet ist.

2. Aufputzdose nach Anspruch 1, **dadurch gekennzeichnet, dass** die Befestigungsplatte (1) mindestens eine vorstehende Haltelasche (27) aufweist und mindestens eine vorstehende Rastlasche (29) mit einem hakenartigen Vorsprung (30), während das Gehäuse (2) eine Ausnehmung (28) aufweist, in welche die Haltelasche (27) eingreift sowie einen elastisch ausbiegbaren Raststeg (31), den der Vorsprung (30) der Rastlasche (29) übergreift.

3. Aufputzdose nach Anspruch 2, **dadurch gekennzeichnet, dass** die Befstigungsplatte (1) mindestens zwei auf gleicher Höhe mit Abstand nebeneinander angeordnete, jeweils in eine Ausnehmung (28) am Gehäuse (2) eingreifende Haltelaschen (27) aufweist sowie mindestens zwei unterhalb derselben mit Abstand nebeneinander angeordnete Rastlaschen (29), deren Vorsprünge (30), jeweils einen Raststeg (31) am Gehäuse (2) übergreifend, gegeneinander gerichtet sind.

4. Aufputzdose nach einem der Ansprüche 1 bis 3, **dadurch gekennzeichnet, dass** das Gehäuse (2) eine zur Befestigungsplatte (1) parallele, sowohl von der Befestingungsplatte (1) als auch von der Abdeckung beabstandete, mit mindestens einem Durchbruch (23, 23') versehene Zwischenwand (7) mit einer gegen die Befestigungsplatte (1) weisenden Rückseite und einer derselben gegenüberliegenden Vorderseite aufweist.

5. Aufputzdose nach Anspruch 4, **dadurch gekennzeichnet, dass** das Gehäuse (2) mehrere von der Rückseite der Zwischenwand (7) beabstandete Haltevorsprünge (17') zur Fixierung einer Kabelreserve aufweist.

6. Aufputzdose nach Anspruch 4 oder 5, **dadurch gekennzeichnet, dass** das Gehäuse mehrere von der Vorderseite der Zwischenwand (7) beabstandete Haltevorsprünge (17) zur Fixierung einer Faserreserve aufweist.

7. Aufputzdose nach einem der Ansprüche 4 bis 6, **dadurch gekennzeichnet, dass** die Zwischenwand (7) an der Vorderseite mindestens eine zur Aufnahme eines Spleissschutzes geeignete Halterung (18, 18') aufweist.

8. Aufputzdose nach Anspruch 7, **dadurch gekennzeichnet, dass** sie mindestens zwei Halterungen (18, 18') aufweist, von denen mindestens eine zur Aufnahme eines Schrumpfschlauch-Spleissschutzes (19) und mindestens eine zur Aufnahme eines Press-Spleissschutzes geeignet ist.

9. Aufputzdose nach Anspruch 6 oder 7, **dadurch gekennzeichnet, dass** jede Halterung (18, 18') als mindestens eine Nut ausgebildet ist, welche zwischen mindestens zwei parallelen von der Vorderseite der Zwischenwand (7) abstehenden Stegen gebildet wird.

10. Aufputzdose nach einem der Ansprüche 1 bis 9, **dadurch gekennzeichnet, dass** die Abdeckung einen auf das Gehäuse (2) aufsetzbaren Abdeckrahmen (4) umfasst, welcher eine Restöffnung (5) freilässt sowie eine Abdeckplatte (6), welche die besagte Restöffnung (5) verschliesst.

11. Aufputzdose nach Anspruch 10, **dadurch gekennzeichnet, dass** sie einen Schraubenbolzen (8) umfasst, dessen Kopf an einer Aussenseite der Abdeckplatte (6) anliegt und welcher durch dieselbe und die Zwischenwand (7) hindurch mit einem Gewinde in der Befestigungsplatte (1) eingreift, während ein Teilbereich der Rückseite der Abdeckplatte (6) an einem Anschlag (9) am Abdeckrahmen (4) anliegt.

12. Aufputzdose nach Anspruch 10 oder 11, **dadurch gekennzeichnet, dass** das Gehäuse (2) mindestens drei Anschläge aufweist, welche am Rand der Restöffnung (5) am Abdeckrahmen (4) anliegen, derart, dass sie Verdrehung und zudem Verschiebung desselben nach allen Richtungen allenfalls ausser einer Richtung gegenüber dem Gehäuse (2) verhindern.

13. Aufputzdose nach Anspruch 12, **dadurch gekennzeichnet, dass** das Gehäuse (2) mindestens einen weiteren Anschlag aufweist, welcher an einem Aussenrand des Abdeckrahmens (4) anliegt und Verschiebung desselben nach der zuletzt genannten Richtung verhindert.

14. Aufputzdose nach einem der Ansprüche 1 bis 13, **dadurch gekennzeichnet, dass** die mindestens eine Anschlussöffnung (12) durch eine nach aussen schwenkbar mit dem Gehäuse (2) verbundene Schutzklappe (13) oder mehrere solche Schutzklappen verdeckbar ist.

15. Aufputzdose nach einem der Ansprüche 1 bis 14, **dadurch gekennzeichnet, dass** sie ausserdem eine in der Aufnahme (10) angeordnete Kupplung (11) mit mindestens einer zum Einführen eines Steckers geeigneten Einstecköffnung (39), an deren Grund eine Austrittsöffnung (41) liegt, aufweist sowie ein die Austrittsöffnung (41) verdeckendes Schutzplättchen (42), das derart angebracht und ausgebildet ist, dass es bei Einwirkung einer gegen die Austrittsöffnung (41) gerichteten Kraft, wie sie beim Einführen eines Steckers auf dasselbe einwirkt, federnd ausweicht und die Austrittsöffnung (41) freigibt.
